# EUROPÄISCHE PATENTSCHRIFT

(11) **EP 3 258 306 B1**
(45) Veröffentlichungstag und Bekanntmachung des Hinweises auf die Patenterteilung: **30.12.2020**
(21) Anmeldenummer: 16174458.6
(22) Anmeldetag: 14.06.2016
(51) Int. Cl.: G02C 7/10

(54) **SONNENSCHUTZVORRICHTUNG**
SUNSHADE DEVICE
DISPOSITIF DE PROTECTION SOLAIRE

(43) Veröffentlichungstag der Anmeldung: 20.12.2017
(73) Patentinhaber: Optrel Holding AG, 9630 Wattwil (CH)
(72) Erfinder: Hofer, Kraner, Ramon, 9100 Herisau (CH); Esposito, Martin, 8640 Rapperswil (CH); Blöchlinger, Daniel, 8735 St. Gallenkappel (CH)
(74) Vertreter: Daub, Thomas

(56) Entgegenhaltungen:
- EP-A2- 2 565 603
- DE-A1- 19 714 434
- US-B1- 8 081 262

## Beschreibung

### Stand der Technik

Die Erfindung betrifft eine Sonnenschutzvorrichtung.

Aus der US 8,081,262 B1 ist bereits eine Sonnenschutzvorrichtung, insbesondere eine Sonnenbrille, mit zumindest einem optischen Sonnenschutzfilter, der zumindest eine Flüssigkristallzelle aufweist, und mit zumindest einer Sensoreinheit, welche zu einer Erfassung einer Sonneneinstrahlung vorgesehen ist, vorgeschlagen worden.

Ferner ist in der EP 2 565 603 A2 bereits eine Sonnenschutzvorrichtung vorgeschlagen worden.

Die Aufgabe der Erfindung besteht insbesondere darin, eine gattungsgemäße Vorrichtung mit verbesserten Eigenschaften hinsichtlich einer Robustheit sowie hinsichtlich einer Anpassbarkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Sonnenbrille, mit einem optischen Sonnenschutzfilter, der zumindest eine Flüssigkristallzelle aufweist, und mit einer Sensoreinheit, welche zu einer Erfassung einer Sonneneinstrahlung vorgesehen ist. Die Erfindung betrifft eine Sonnenbrille gemäß Anspruch 1 und ihr Herstellungsverfahren gemäß Anspruch 8.

Es wird vorgeschlagen, dass die Sonnenbrille eine Sensorabdeckung aufweist, welche eine Sensorfläche der zumindest einen Sensoreinheit zumindest teilweise abdeckt und welche gegenüber Strahlung von zumindest 70% eines Spektralsbereichs des sichtbaren Lichtspektrums zumindest im Wesentlichen opak ist. Vorzugsweise weist die Sonnenschutzvorrichtung zudem eine Steuer- und/oder Regeleinheit auf, welche dazu vorgesehen ist, abhängig von einer Sonneneinstrahlung eine Durchlässigkeit des optischen Sonnenschutzfilters zu steuern und/oder zu regeln. Unter einer "Sonnenschutzvorrichtung" soll in diesem Zusammenhang insbesondere eine Vorrichtung verstanden werden, die zu einem Schutz der Augen eines Benutzers vor, insbesondere störender, Sonneneinstrahlung vorgesehen ist. Vorzugsweise soll darunter insbesondere eine Vorrichtung verstanden werden, welche dazu vorgesehen ist, eine Sonneneinstrahlung zumindest zu verringern. Besonders bevorzugt ist die Sonnenschutzvorrichtung in zumindest einem Betriebszustand zu einer Abdunkelung einer, insbesondere störender, Sonneneinstrahlung auf die Augen des Benutzers vorgesehen. Es sind verschiedene, einem Fachmann als sinnvoll erscheinende Ausbildungen der Sonnenschutzvorrichtung denkbar, wie beispielsweise als eine Sonnenschutzblende und/oder besonders bevorzugt als eine Sonnenbrille. Ferner soll in diesem Zusammenhang unter einem "optischen Sonnenschutzfilter" insbesondere ein optischer Filter verstanden werden, welcher insbesondere ein Schutzglas und/oder ein Kunststoffschutzglas, insbesondere zu einem Schutz vor störender Sonneneinstrahlung, bildet. Vorzugsweise soll darunter insbesondere ein optischer Filter verstanden werden, dessen Lichtdurchlässigkeit einstellbar ausgeführt ist. Bevorzugt soll darunter insbesondere ein optischer Schutzfilter mit einer automatischen Verdunkelung verstanden werden. Besonders bevorzugt weist der Sonnenschutzfilter zumindest eine in der Transmission schaltbare Flüssigkristallebene auf. Vorzugsweise weist der optische Sonnenschutzfilter zumindest eine Flüssigkristallzelle auf. Es sind verschiedene, einem Fachmann als sinnvoll erscheinende Flüssigkristallzellen denkbar, wie insbesondere eine TN-Flüssigkristallzelle mit der Twisted-Nematic-Technik. Unter einer "Sensoreinheit" soll in diesem Zusammenhang insbesondere eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, einem Fachmann als sinnvoll erscheinende Sensoreinheiten für eine Sonnenschutzvorrichtung denkbar. Vorzugsweise weist die Sensoreinheit zumindest eine Photozelle, insbesondere eine Photodiode und/oder insbesondere eine Solarzelle, auf. Bevorzugt ist die Photozelle insbesondere zumindest zu einer optischen Detektion eines Sonnenlichts und/oder eines künstlichen Lichts vorgesehen.

Unter einer "Sensorabdeckung" soll in diesem Zusammenhang insbesondere ein Element verstanden werden, welches die zumindest eine Sensoreinheit, vorzugsweise in eine Detektionsrichtung der Sensoreinheit, zumindest teilweise abdeckt, insbesondere überdeckt. Vorzugsweise soll darunter insbesondere ein Element verstanden werden, welches eine Sensorfläche der zumindest einen Sensoreinheit zumindest teilweise abdeckt, insbesondere überdeckt. Bevorzugt soll darunter insbesondere eine Abdeckung verstanden werden, welche die zumindest eine Sensoreinheit, vorzugsweise in eine Detektionsrichtung der Sensoreinheit, insbesondere zu einem Schutz, wie beispielsweise vor Stößen oder dergleichen, zumindest teilweise abdeckt. Besonders bevorzugt soll darunter insbesondere eine Abdeckung verstanden werden, welche die zumindest eine Sensoreinheit, vorzugsweise in eine Detektionsrichtung der Sensoreinheit, insbesondere um die Sensoreinheit für einen Betrachter von außen unsichtbar zu integrieren, zumindest teilweise abdeckt. Ferner soll in diesem Zusammenhang unter einer "Sensorfläche" der Sensoreinheit insbesondere eine Detektionsfläche der Sensoreinheit verstanden werden. Vorzugsweise soll darunter insbesondere eine Fläche der Sensoreinheit verstanden werden, auf welcher die Sensoreinheit eine Sonneneinstrahlung erfassen kann. Besonders bevorzugt soll darunter insbesondere eine Zelloberfläche der Sensoreinheit verstanden werden. Vorzugsweise ist die Sensorfläche nach vorne, also insbesondere in Richtung einer hypothetischen Blickrichtung eines Benutzers, gerichtet. Bevorzugt erstreckt sich die Sensorfläche im Wesentlichen parallel zu einer Stirnseite der Sonnenschutzvorrichtung. Darunter, dass "die Sensorabdeckung die Sensorfläche der zumindest einen Sensoreinheit zumindest teilweise abdeckt" soll in diesem Zusammenhang insbesondere verstanden werden, dass zumindest 10%, vorzugsweise zumindest 30% und besonders bevorzugt zumindest 50% aller Flächennormalen der Sensorfläche in einer von der Sensoreinheit wegweisenden Richtung die Sensorabdeckung schneiden. Des Weiteren soll unter "zumindest teilweise gegenüber Strahlung eines sichtbaren Lichtspektrums" insbesondere gegenüber Strahlung zumindest einer Wellenlänge des sichtbaren Lichtspektrums verstanden werden. Vorzugsweise soll darunter insbesondere gegenüber Strahlung von zumindest 10 %, vorzugsweise zumindest 40 % und besonders bevorzugt zumindest 70 % eines Spektralbereichs des sichtbaren Lichtspektrums verstanden werden. Dabei soll unter einem "sichtbaren Lichtspektrum" insbesondere Strahlung mit einer Wellenlänge λ von 380 nm bis 780 nm verstanden werden. Unter "zumindest im Wesentlichen opak" soll in diesem Zusammenhang insbesondere verstanden werden, dass zumindest 50%, vorzugsweise zumindest 70% und besonders bevorzugt zumindest 90% einer entsprechenden Strahlung absorbiert und/oder reflektiert wird. Darunter, dass die zumindest eine "Sensorabdeckung zumindest teilweise gegenüber Strahlung eines sichtbaren Lichtspektrums zumindest im Wesentlichen opak ist", soll insbesondere verstanden werden, dass Strahlung mit zumindest einer Wellenlänge des sichtbaren Lichtspektrums, insbesondere Strahlung von zumindest 10 %, vorzugsweise zumindest 40 % und besonders bevorzugt zumindest 70 % eines Spektralbereichs des sichtbaren Lichtspektrums, von der Sensorabdeckung zumindest im Wesentlichen absorbiert und/oder reflektiert wird. Vorzugsweise soll darunter insbesondere verstanden werden, dass die Sensorabdeckung für das menschliche Auge zumindest im Wesentlichen undurchsichtig, insbesondere opak, ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Des Weiteren soll in diesem Zusammenhang unter einer "Steuer- und/oder Regeleinheit" insbesondere eine Einheit mit zumindest einer Steuerelektronik verstanden werden. Unter einer "Steuerelektronik" soll insbesondere eine Einheit mit zumindest einer elektronischen Schaltung verstanden werden, welche vorzugsweise aus Spannungs- und Vergleichsregelbausteinen besteht. Grundsätzlich kann die Steuerelektronik jedoch auch komplexer aufgebaut sein, wie insbesondere durch die Nutzung einer anwendungsspezifischen integrierten Schaltung (ASIC) und/oder eines Mikrokontrollerbausteins. Unter einer "Durchlässigkeit des optischen Sonnenschutzfilters" soll in diesem Zusammenhang insbesondere ein Transmissionsgrad von Sonnenlicht durch den optischen Sonnenschutzfilter verstanden werden. Vorzugsweise soll darunter insbesondere verstanden werden, inwieweit das sichtbare Spektrum des Sonnenlichts durch den optischen Sonnenschutzfilter absorbiert und/oder reflektiert wird. Besonders bevorzugt soll darunter insbesondere eine Tönung verstanden werden.

Durch die erfindungsgemäße Ausgestaltung der Sonnenschutzvorrichtung kann insbesondere eine vorteilhaft robuste Sonnenschutzvorrichtung bereitgestellt werden. Die Sensoreinheit der Sonnenschutzvorrichtung kann dadurch vorteilhaft geschützt werden. Ferner kann die Sensoreinheit dadurch vorteilhaft verborgen werden. Es kann insbesondere eine störende Anordnung der Sensoreinheit vermieden werden. Es kann insbesondere eine hohe Anpassbarkeit der Sonnenschutzvorrichtung erreicht werden.

Ferner kann dadurch insbesondere eine vorteilhaft große Sensoreinheit verwendet werden, ohne dass dies ein Erscheinungsbild der Sonnenschutzvorrichtung beeinträchtigt.

Ferner wird vorgeschlagen, dass die zumindest eine Sensorabdeckung die Sensorfläche der zumindest einen Sensoreinheit zumindest im Wesentlichen vollständig abdeckt. Vorzugsweise deckt die zumindest eine Sensorabdeckung die Sensorfläche der zumindest einen Sensoreinheit insbesondere vollständig ab. Darunter, dass "die Sensorabdeckung die Sensorfläche der zumindest einen Sensoreinheit zumindest im Wesentlichen vollständig abdeckt" soll in diesem Zusammenhang insbesondere verstanden werden, dass zumindest 70%, vorzugsweise zumindest 80% und besonders bevorzugt zumindest 90% aller Flächennormalen der Sensorfläche in einer von der Sensoreinheit wegweisenden Richtung die Sensorabdeckung schneiden. Dadurch kann insbesondere eine vorteilhaft robuste Sonnenschutzvorrichtung bereitgestellt werden. Die Sensoreinheit kann dadurch besonders vorteilhaft geschützt werden. Ferner kann die Sensoreinheit dadurch vorteilhaft vollständig verborgen werden. Es kann insbesondere eine störende Anordnung der Sensoreinheit vermieden werden.

Des Weiteren wird vorgeschlagen, dass die zumindest eine Sensorabdeckung zumindest teilweise gegenüber Strahlung eines Infrarot-Lichtspektrums zumindest im Wesentlichen transluzent ist. Unter "zumindest teilweise gegenüber Strahlung eines Infrarot-Lichtspektrums" soll in diesem Zusammenhang insbesondere gegenüber Strahlung zumindest einer Wellenlänge des Infrarot-Lichtspektrums, insbesondere des Nah-Infrarot-Lichtspektrums, verstanden werden. Vorzugsweise soll darunter insbesondere gegenüber Strahlung von zumindest 10 %, vorzugsweise zumindest 40 % und besonders bevorzugt zumindest 70 % eines Spektralbereichs des Infrarot-Lichtspektrums, insbesondere des Nah-Infrarot-Lichtspektrums, verstanden werden. Dabei soll unter einem "Infrarot-Lichtspektrum" insbesondere Strahlung mit einer Wellenlänge λ von zumindest 780 nm bis zumindest 1100 nm, vorzugsweise bis zumindest 3000 nm verstanden werden. Unter "zumindest im Wesentlichen transluzent" soll in diesem Zusammenhang insbesondere verstanden werden, dass zumindest 50%, vorzugsweise zumindest 70% und besonders bevorzugt zumindest 90% einer entsprechenden Strahlung transmittiert werden. Darunter, dass die zumindest eine "Sensorabdeckung zumindest teilweise gegenüber Strahlung eines Infrarot-Lichtspektrums zumindest im Wesentlichen transluzent ist", soll insbesondere verstanden werden, dass Strahlung mit zumindest einer Wellenlänge des Infrarot-Lichtspektrums, insbesondere Strahlung von zumindest 10 %, vorzugsweise zumindest 40 % und besonders bevorzugt zumindest 70 % eines Spektralbereichs des Infrarot-Lichtspektrums, von der Sensorabdeckung zumindest im Wesentlichen transmittiert wird. Vorzugsweise soll darunter insbesondere verstanden werden, dass die Sensorabdeckung zwar für das menschliche Auge zumindest im Wesentlichen undurchsichtig, insbesondere opak, ist, jedoch zumindest ein Teil einer Strahlung eines Infrarot-Lichtspektrums durch die Sensorabdeckung hindurchtritt. Dadurch kann vorteilhaft gewährleistet werden, dass zumindest ein Teil einer Sonnenstrahlung auf die Sensoreinheit trifft. Es kann insbesondere erreicht werden, dass zumindest ein Teil einer Energie der Sonnenstrahlung auf die Sensoreinheit trifft. Trotz allem kann auf eine sichtbare Anordnung der Sensoreinheit verzichtet werden.

Ferner wird vorgeschlagen, dass die zumindest eine Sensorabdeckung zumindest teilweise gegenüber Strahlung eines UV-Lichtspektrums zumindest im Wesentlichen transluzent ist. Unter "zumindest teilweise gegenüber Strahlung eines UV-Lichtspektrums" soll in diesem Zusammenhang insbesondere gegenüber Strahlung zumindest einer Wellenlänge des UV-Lichtspektrums, insbesondere zumindest des UV-A-Lichtspektrums, verstanden werden. Vorzugsweise soll darunter insbesondere gegenüber Strahlung von zumindest 10 %, vorzugsweise von zumindest 40 % und besonders bevorzugt von zumindest 70 % eines Spektralbereichs des UV-Lichtspektrums, insbesondere des UV-A-Lichtspektrums, verstanden werden. Dabei soll unter einem "UV-Lichtspektrum" insbesondere Strahlung mit einer Wellenlänge λ von zumindest 310 nm, insbesondere von zumindest 100 nm bis zumindest 380 nm, vorzugsweise bis zumindest 400 nm verstanden werden. Unter "zumindest im Wesentlichen transluzent" soll in diesem Zusammenhang insbesondere verstanden werden, dass zumindest 50%, vorzugsweise zumindest 70% und besonders bevorzugt zumindest 90% einer entsprechenden Strahlung transmittiert werden. Darunter, dass die zumindest eine "Sensorabdeckung zumindest teilweise gegenüber Strahlung eines UV-Lichtspektrums zumindest im Wesentlichen transluzent ist", soll insbesondere verstanden werden, dass Strahlung mit zumindest einer Wellenlänge des UV-Lichtspektrums, insbesondere Strahlung von zumindest 10 %, vorzugsweise von zumindest 40 % und besonders bevorzugt von zumindest 70 % eines Spektralbereichs des UV-Lichtspektrums, von der Sensorabdeckung zumindest im Wesentlichen transmittiert wird. Vorzugsweise soll darunter insbesondere verstanden werden, dass die Sensorabdeckung zwar für das menschliche Auge zumindest im Wesentlichen undurchsichtig, insbesondere opak, ist, jedoch zumindest ein Teil einer Strahlung eines UV-Lichtspektrums durch die Sensorabdeckung hindurchtritt. Dadurch kann vorteilhaft gewährleistet werden, dass zumindest ein Teil einer Sonnenstrahlung auf die Sensoreinheit trifft. Es kann insbesondere erreicht werden, dass zumindest ein Teil einer Energie der Sonnenstrahlung auf die Sensoreinheit trifft. Trotz allem kann auf eine sichtbare Anordnung der Sensoreinheit verzichtet werden.

Erfindungsgemäß wird ferner vorgeschlagen, dass die Sonnenschutzvorrichtung einen Brillenrahmen aufweist, welcher zu einer Aufnahme des optischen Sonnenschutzfilters vorgesehen ist. Vorzugsweise weist der Brillenrahmen zumindest einen, vorzugsweise zumindest zwei Aufnahmebereiche auf, die jeweils zu einer Aufnahme einer Flüssigkristallzelle des zumindest einen optischen Sonnenschutzfilters vorgesehen ist. Unter einem "Brillenrahmen" soll in diesem Zusammenhang insbesondere ein Rahmen verstanden werden, welcher zu einer Anordnung der Sonnenschutzvorrichtung in einem Gesicht des Benutzers vorgesehen ist. Vorzugsweise ist der Rahmen zu einer Anordnung der Sonnenschutzvorrichtung auf einer Nase sowie den Ohren des Benutzers vorgesehen. Besonders bevorzugt ist der Brillenrahmen von einem Brillengestell gebildet. Dadurch kann insbesondere eine vorteilhafte Ausbildung der Sonnenschutzvorrichtung erreicht werden. Vorzugsweise kann die Sonnenschutzvorrichtung dadurch zuverlässig in einem Gesicht des Benutzers angeordnet werden. Es kann insbesondere eine brillenartige Ausbildung der Sonnenschutzvorrichtung bereitgestellt werden.

Es wird weiter vorgeschlagen, dass die zumindest eine Sensorabdeckung zumindest teilweise einstückig mit dem Brillenrahmen ausgebildet ist. Erfindungsgemäß ist die zumindest eine Sensorabdeckung einstückig mit einem Grundrahmen des Brillenrahmens ausgebildet, wobei die Sensorabdeckung und der Grundrahmen des Brillenrahmens gemeinsam in einem Spritzgussverfahren einstückig hergestellt sind. Bevorzugt weist der Brillenrahmen einen Grundrahmen sowie zwei an dem Grundrahmen beweglich gelagerte Brillenbügel auf. Besonders bevorzugt bestehen die Sensorabdeckung und zumindest ein Teil des Brillenrahmens, wie insbesondere der Grundrahmen, aus demselben Material. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling, wie beispielsweise durch Drehen, Fräsen Laserschneiden und/oder einem anderen, einem Fachmann als sinnvoll erscheinenden Verfahren. Dadurch kann eine vorteilhafte Integration der Sensorabdeckung erreicht werden. Ferner kann dadurch eine Anzahl von Bauteilen gering gehalten werden. Des Weiteren kann dadurch insbesondere eine vorteilhaft hohe Homogenität des Brillenrahmens und der gesamten Sonnenschutzvorrichtung erreicht werden.

Ferner wird vorgeschlagen, dass die zumindest eine Sensorabdeckung und der zumindest eine Brillenrahmen zumindest teilweise in einem Spritzgussverfahren hergestellt sind. Vorzugsweise sind die zumindest eine Sensorabdeckung und der zumindest eine Brillenrahmen zumindest teilweise gemeinsam in einem Spritzgussverfahren einstückig hergestellt. Bevorzugt sind die Sensorabdeckung und der zumindest eine Brillenrahmen zumindest teilweise in einem Mehrkomponentenspritzverfahren oder besonders bevorzugt in einem Einkomponentenspritzverfahren hergestellt. Dadurch kann eine besonders vorteilhafte Integration der Sensorabdeckung erreicht werden. Ferner kann dadurch eine vorteilhaft einfache Herstellung der Sonnenschutzvorrichtung erreicht werden.

Des Weiteren wird vorgeschlagen, dass die zumindest eine Sensoreinheit zumindest teilweise in den Brillenrahmen integriert ist. Vorzugsweise ist die zumindest eine Sensoreinheit zumindest teilweise in dem Brillenrahmen aufgenommen. Unter "zumindest teilweise integriert" soll in diesem Zusammenhang insbesondere verstanden werden, dass zumindest Teile der Sensoreinheit, vorzugsweise die gesamte Sensoreinheit, zumindest teilweise, insbesondere vollständig, innerhalb einer Außenkontur des Brillenrahmens angeordnet sind. Vorzugsweise wird die Sensoreinheit zumindest teilweise von dem Brillenrahmen umgriffen. Dabei soll unter "zumindest teilweise umgriffen" insbesondere verstanden werden, dass ein umgriffenes Element und/oder eine umgriffene Einheit in zumindest einer Ebene ausgehend von einem geometrischen Mittelpunkt in einem Winkelbereich von zumindest 90°, vorzugsweise von zumindest 120° und besonders bevorzugt von zumindest 180° von dem Brillenrahmen umschlossen wird. Dadurch kann eine vorteilhafte Integration der Sensoreinheit erreicht werden. Es kann dadurch insbesondere eine vorteilhaft hohe Homogenität des Brillenrahmens sowie der gesamten Sonnenschutzvorrichtung erreicht werden. Ferner kann die Sensoreinheit dadurch weiter geschützt werden.

Es wird ferner vorgeschlagen, dass die zumindest eine Sensoreinheit in zumindest einem Betriebszustand zu einer zumindest teilweisen Bereitstellung einer Energie zu einer Ansteuerung der zumindest einen Flüssigkristallzelle des optischen Sonnenschutzfilters vorgesehen ist. Vorzugsweise ist die zumindest eine Sensoreinheit in zumindest einem Betriebszustand zu einer vollständigen Bereitstellung einer Energie zu einer Ansteuerung der zumindest einen Flüssigkristallzelle des optischen Sonnenschutzfilters vorgesehen. Bevorzugt ist die zumindest eine Sensoreinheit während eines Betriebs der Sonnenschutzvorrichtung zu einer vollständigen Bereitstellung einer Energie zu einer Ansteuerung der zumindest einen Flüssigkristallzelle des optischen Sonnenschutzfilters vorgesehen. Besonders bevorzugt ist die zumindest eine Sensoreinheit während eines Betriebs der Sonnenschutzvorrichtung zu einer vollständigen Gewinnung einer zu einer Ansteuerung der zumindest einen Flüssigkristallzelle des optischen Sonnenschutzfilters benötigten Energie vorgesehen. Vorzugsweise ist die Sonnenschutzvorrichtung batterielos ausgebildet. Dadurch kann insbesondere auf eine externe Energieversorgung wie beispielsweise mittels einer Batterie und/oder mittels eines Akkumulators verzichtet werden. Es kann eine autarke Sonnenschutzvorrichtung bereitgestellt werden.

Es wird weiter vorgeschlagen, dass die zumindest eine Sensoreinheit zumindest eine Photodiode und/oder zumindest eine Solarzelle aufweist. Vorzugsweise weist die Sensoreinheit zumindest eine Photozelle auf. Bevorzugt ist die Sensoreinheit von einer Solarzelle und/oder Photozelle gebildet. Dadurch kann eine vorteilhaft zuverlässige Sensoreinheit mit einer vorteilhaft hohen Energieausbeute bereitgestellt werden. Ferner kann insbesondere auf eine externe Energieversorgung wie beispielsweise mittels einer Batterie und/oder mittels eines Akkumulators verzichtet werden. Bei der Verwendung einer Photozelle kann insbesondere eine Sensoreinheit bereitgestellt werden, mittels der insbesondere auch Licht in einem nicht sichtbaren Bereich, wie insbesondere Infrarotlicht, erfasst und vorzugsweise verwertet werden kann. Bei der Verwendung einer Solarzelle wäre insbesondere die Verwendung einer Solarzelle bevorzugt, welche insbesondere auch Licht in einem nicht sichtbaren Bereich, wie insbesondere Infrarotlicht, erfassen und vorzugsweise verwerten kann. Es kann dadurch eine autarke Sonnenschutzvorrichtung bereitgestellt werden. Insbesondere kann dadurch erreicht werden, dass mit zunehmender Sonneneinstrahlung mehr Energie zu einer Ansteuerung der zumindest einen Flüssigkristallzelle des optischen Sonnenschutzfilters zur Verfügung steht. Eine Energieerzeugung ist dadurch vorteilhaft an einen Energiebedarf angepasst. Ferner kann auch bei einer Abschirmung der Sensoreinheit gegenüber sichtbarem Licht ausreichend Strahlung auf der Sensoreinheit erfasst werden.

Ferner geht die Erfindung aus von einem Verfahren zur Herstellung der Sonnenschutzvorrichtung. Es wird vorgeschlagen, dass zumindest ein Teil des Brillenrahmens und die zumindest eine Sensorabdeckung einstückig in einem Spritzgussverfahren hergestellt werden. Dadurch kann eine vorteilhaft einfache und schnelle Herstellung der Sonnenschutzvorrichtung bereitgestellt werden. Es kann insbesondere eine vorteilhaft geringe Anzahl von Fertigungsschritten bereitgestellt werden.

Die erfindungsgemäße Sonnenschutzvorrichtung, die Sensorabdeckung sowie das Verfahren sollen hierbei nicht auf die oben beschriebene Anwendung und Ausführungsform beschränkt sein. Insbesondere können die erfindungsgemäße Sonnenschutzvorrichtung, die Sensorabdeckung sowie das Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Sonnenschutzvorrichtung mit einem Sonnenschutzfilter, welcher zwei Flüssigkristallzellen aufweist, mit einer Sensoreinheit und mit einer Sensorabdeckung und einen Benutzer, welcher die erfindungsgemäße Sonnenschutzvorrichtung trägt, in einer schematischen Frontalansicht,
- Fig. 2: die erfindungsgemäße Sonnenschutzvorrichtung in einer schematischen Seitenansicht,
- Fig. 3: die erfindungsgemäße Sonnenschutzvorrichtung in einer schematischen Draufsicht,
- Fig. 4: einen Teilausschnitt V der erfindungsgemäßen Sonnenschutzvorrichtung mit der Sensoreinheit und mit der Sensorabdeckung in einer schematischen Darstellung,
- Fig. 5: einen Teilausschnitt der erfindungsgemäßen Sonnenschutzvorrichtung mit der Sensoreinheit, mit der Sensorabdeckung und mit einer Steuer- und Regeleinheit in einer schematischen Schnittdarstellung entlang der Schnittlinie V-V,
- Fig. 6: ein Diagramm einer Empfindlichkeit der Sensoreinheit, einer Transparenz der Sensorabdeckung und einer Intensität des Sonnenlichtspektrums, sowie einer daraus resultierenden Empfindlichkeit der Sensoreinheit abhängig von einer Wellenlänge,
- Fig. 7: ein Diagramm einer Intensität des Sonnenlichtspektrums, der Intensität des Sonnenlichtspektrums abzüglich der Verluste durch die Sensorabdeckung und der Intensität des Sonnenlichtspektrums abzüglich der Verluste durch die Sensorabdeckung sowie durch die Empfindlichkeit der Sensoreinheit abhängig von einer Wellenlänge und
- Fig. 8: einen Teilausschnitt einer alternativen erfindungsgemäßen Sonnenschutzvorrichtung mit einer Sensoreinheit, mit einer Sensorabdeckung und mit einer Steuer- und Regeleinheit in einer schematischen Schnittdarstellung.

### Beschreibung der Ausführungsbeispiele

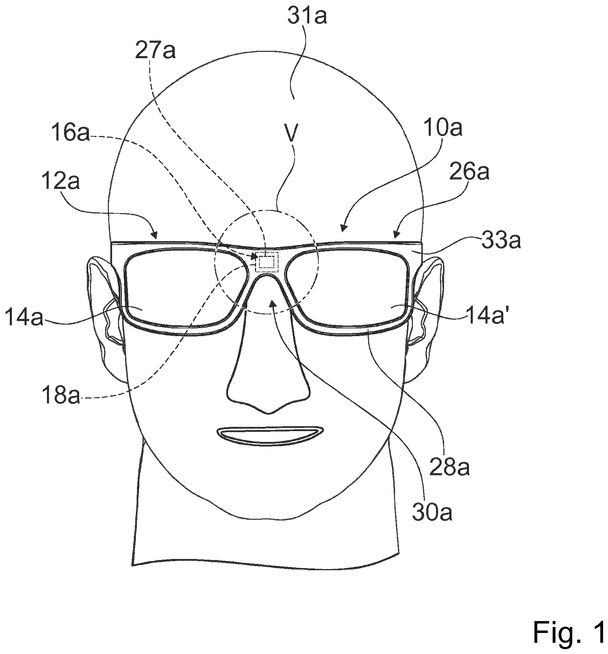

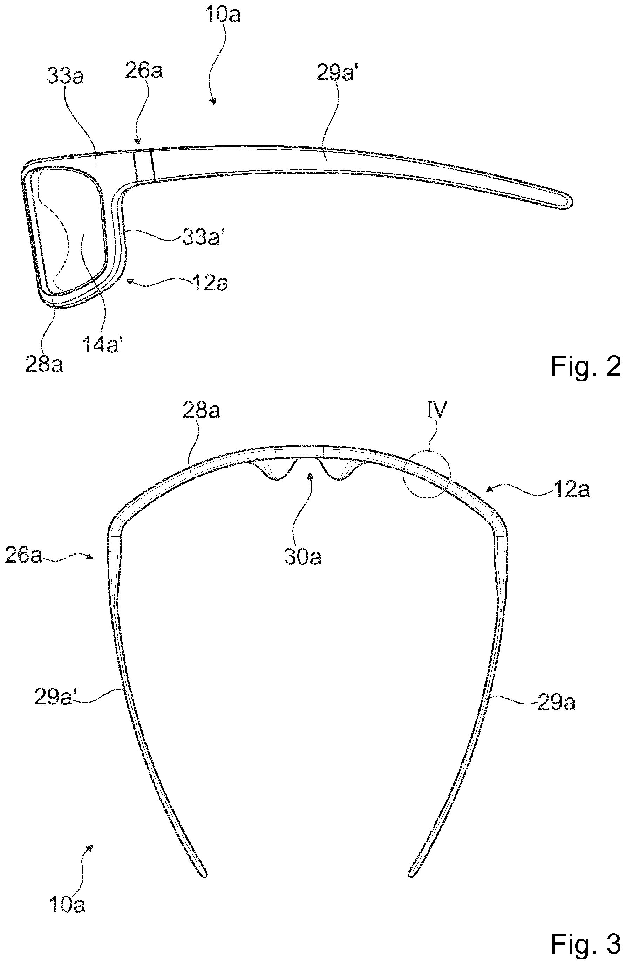

Die Figuren 1 und 2 zeigen eine Sonnenschutzvorrichtung 10a. Die Sonnenschutzvorrichtung 10a ist von einer Sonnenbrille gebildet. Die Sonnenschutzvorrichtung 10a ist von einer Sonnenbrille gebildet, welche selbsttätig abhängig von einer Sonneneinstrahlung abdunkelt. Grundsätzlich wäre jedoch auch eine andere, einem Fachmann als sinnvoll erscheinende Ausbildung der Sonnenschutzvorrichtung 10a denkbar. Die Sonnenschutzvorrichtung 10a weist einen Brillenrahmen 26a auf. Der Brillenrahmen 26a ist von einem Brillengestell gebildet. Der Brillenrahmen 26a besteht im Wesentlichen aus Kunststoff. Grundsätzlich wäre jedoch auch ein anderes, einem Fachmann als sinnvoll erscheinendes Material denkbar, wie beispielsweise Holz, Metall und/oder ein Faserverbundwerkstoff. Der Brillenrahmen 26a weist einen Grundrahmen 28a sowie zwei an dem Grundrahmen 28a beweglich gelagerte Brillenbügel 29a, 29a' auf. Der Grundrahmen 28a weist einen Nasenausschnitt 30a zu einer Auflage auf einer Nase eines Benutzers 31a auf. Die Brillenbügel 29a sind jeweils zu einer Auflage auf den Ohren des Benutzers 31a vorgesehen. Der Grundrahmen 28a besteht aus zwei Rahmenteilen 33a, 33a'. Grundsätzlich wäre jedoch auch denkbar, dass der Grundrahmen 28a einstückig ausgebildet ist. Die beiden Rahmenteile 33a, 33a' sind jeweils von einem Schalenteil gebildet. Ein erstes Rahmenteil 33a ist auf einer Vorderseite angeordnet und ein zweites Rahmenteil 33a' ist auf einer Rückseite angeordnet. Die Rahmenteile 33a, 33a' sind miteinander verklebt, wobei ein Hohlraum zwischen den Rahmenteilen 33a, 33a' abgedichtet wird. Komponenten, welche innerhalb des Grundrahmens 28a angeordnet sind, werden vor einem Verkleben in die Rahmenteile 33a, 33a' eingelegt.

Ferner weist die Sonnenschutzvorrichtung 10a einen optischen Sonnenschutzfilter 12a auf. Der Brillenrahmen 26a ist zu einer Aufnahme des optischen Sonnenschutzfilters 12a vorgesehen. Der optische Sonnenschutzfilter 12a ist in dem Brillenrahmen 26a aufgenommen. Eine Lichtdurchlässigkeit des optischen Sonnenschutzfilters 12a ist einstellbar ausgeführt. Der optische Sonnenschutzfilter 12a ist im Wesentlichen Transparent ausgebildet, wobei eine Transmission T des optischen Sonnenschutzfilters 12a elektrisch veränderbar ausgebildet ist. Der optische Sonnenschutzfilter 12a weist zwei Flüssigkristallzellen 14a, 14a' auf. Die Flüssigkristallzellen 14a, 14a' sind gegenüber einander spiegelsymmetrisch ausgebildet. Die Flüssigkristallzellen 14a, 14a' sind in dem Brillenrahmen 26a aufgenommen. Der Grundrahmen 28a des Brillenrahmens 26a weist zwei Ausnehmungen auf, in welchen die Flüssigkristallzellen 14a, 14a' aufgenommen sind. Die Flüssigkristallzellen 14a, 14a' sind jeweils auf gegenüberliegenden Seiten des Nasenausschnitts 30a angeordnet. Jede der Flüssigkristallzellen 14a, 14a' des optischen Sonnenschutzfilters 12a ist jeweils einem Auge des Benutzers 31a zugeordnet. Die Flüssigkristallzellen 14a, 14a' weisen jeweils eine in der Transmission T schaltbare Flüssigkristallebene auf. Grundsätzlich wäre jedoch auch denkbar, dass der optische Sonnenschutzfilter 12a lediglich eine Flüssigkristallzelle 14a aufweist, welche sich insbesondere über beide Augen des Benutzers 31a erstreckt.

Die Flüssigkristallzellen 14a, 14a' des optischen Sonnenschutzfilters 12a sind jeweils von einer Kunststoff-Flüssigkristallzelle gebildet. Die Flüssigkristallzellen 14a, 14a' bestehen jeweils aus mehreren Schichten. Die Flüssigkristallzellen 14a, 14a' des optischen Sonnenschutzfilters 12a sind jeweils zumindest teilweise gebogen ausgebildet. Die Flüssigkristallzellen 14a, 14a' des optischen Sonnenschutzfilters 12a sind jeweils über eine gesamte Erstreckung gebogen ausgebildet (Fig. 3).

Des Weiteren weist die Sonnenschutzvorrichtung 10a eine Sensoreinheit 16a auf. Die Sensoreinheit 16a ist zu einer Erfassung einer Sonneneinstrahlung vorgesehen ist. Die Sensoreinheit 16a weist eine Sensorfläche 20a auf, welche zu einer direkten Erfassung einer Sonneneinstrahlung vorgesehen ist. Die Sensoreinheit 16a ist in dem Brillenrahmen 26a angeordnet. Die Sensoreinheit 16a ist in dem Grundrahmen 28a des Brillenrahmens 26a zwischen den Ausnehmungen für die Flüssigkristallzellen 14a, 14a' angeordnet. Die Sensoreinheit 16a ist in dem Grundrahmen 28a des Brillenrahmens 26a oberhalb des Nasenausschnitts 30a angeordnet. Die Sensoreinheit 16a ist in den Brillenrahmen 26a integriert. Der Grundrahmen 28a des Brillenrahmens 26a weist oberhalb des Nasenausschnitts 30a einen Aufnahmebereich 42a auf. Der Aufnahmebereich 42a ist von einer Vertiefung gebildet. Die Sensoreinheit 16a ist in dem Aufnahmebereich 42a des Grundrahmens 28a angeordnet. Die Sensoreinheit 16a weist eine oder mehrere Photodioden auf. Die Photodioden bilden einen Photodiodenbereich 27a. Die Sensoreinheit 16a ist von dem Photodiodenbereich 27a gebildet. Die Photodioden des Photodiodenbereichs 27a sind jeweils von einer Photozelle gebildet. Grundsätzlich wäre jedoch auch denkbar, dass die Sensoreinheit 16a beispielsweise eine Solarzelle aufweist. Ferner wäre beispielsweise denkbar, dass zumindest ein Teil der Sensoreinheit 16a, wie beispielsweise einzelne Photodioden, als Streifen in einem Stirnbereich der Sonnenschutzvorrichtung 10a angeordnet sind.

Ferner weist die Sonnenschutzvorrichtung 10a eine Steuer- und Regeleinheit 44a auf. Die Steuer- und Regeleinheit 44a ist dazu vorgesehen, abhängig von einer Sonneneinstrahlung eine Durchlässigkeit des optischen Sonnenschutzfilters 12a zu steuern. Die Steuer- und Regeleinheit 44a ist dazu nicht weiter sichtbar mit der Sensoreinheit 16a verbunden. Ferner ist die Steuer- und Regeleinheit 44a nicht weiter sichtbar mit den Flüssigkristallzellen 14a, 14a' des optischen Sonnenschutzfilters 12a verbunden. Die Steuer- und Regeleinheit 44a ist nicht weiter dargestellt elektrisch mit den Elektrodenschichten der Flüssigkristallzellen 14a, 14a' verbunden. Die Steuer- und Regeleinheit 44a ist in dem Brillenrahmen 26a angeordnet. Die Steuer- und Regeleinheit 44a ist in dem Grundrahmen 28a des Brillenrahmens 26a zwischen den Ausnehmungen für die Flüssigkristallzellen 14a, 14a' angeordnet. Die Steuer- und Regeleinheit 44a ist in dem Grundrahmen 28a des Brillenrahmens 26a oberhalb des Nasenausschnitts 30a angeordnet. Die Steuer- und Regeleinheit 44a ist in den Brillenrahmen 26a integriert. Die Steuer- und Regeleinheit 44a ist in dem Aufnahmebereich 42a des Grundrahmens 28a angeordnet. Grundsätzlich wäre jedoch auch eine andere, einem Fachmann als sinnvoll erscheinende Anordnung der Steuer- und Regeleinheit 44a denkbar. Die Steuer- und Regeleinheit 44a befindet sich ständig in einem Betrieb und kann insbesondere nicht deaktiviert werden. Die Steuer- und Regeleinheit 44a schaltet sich ab einer definierten an der Sensoreinheit 16a anliegenden Spannung ein und beginnt zu schwingen. Grundsätzlich wäre jedoch auch denkbar, dass die Steuer- und Regeleinheit 44a mittels eines nicht weiter sichtbaren Schalters in einen Betrieb versetzt werden kann.

Die Sensoreinheit 16a ist in einem Betriebszustand zu einer zumindest teilweisen Bereitstellung einer Energie zu einer Ansteuerung der Flüssigkristallzellen 14a, 14a' des optischen Sonnenschutzfilters 12a vorgesehen. Die Sensoreinheit 16a ist während eines Betriebs der Sonnenschutzvorrichtung 10a zu einer vollständigen Bereitstellung einer Energie zu einer Ansteuerung der Flüssigkristallzellen 14a, 14a' des optischen Sonnenschutzfilters 12a vorgesehen. Die Sensoreinheit 16a ist während eines Betriebs der Sonnenschutzvorrichtung 10a zu einer vollständigen Gewinnung einer zu einer Ansteuerung der zumindest einen Flüssigkristallzellen 14a, 14a' des optischen Sonnenschutzfilters 12a benötigten Energie vorgesehen. Die Sensoreinheit 16a stellt die Ansteuerspannung V_{A} bereit. Ferner ist die Sonnenschutzvorrichtung 10a daher batterielos ausgebildet.

Bei einem Betrieb der Sonnenschutzvorrichtung 10a werden die Flüssigkristallzellen 14a, 14a' des optischen Sonnenschutzfilters 12a zu einer Anpassung einer Durchlässigkeit abhängig von einer Sonneneinstrahlung angesteuert. Mittels der Sensoreinheit 16a wird dabei eine Sonneneinstrahlung erfasst und abhängig davon die Flüssigkristallzellen 14a, 14a' angesteuert.

Ferner weist die Sonnenschutzvorrichtung 10a eine Sensorabdeckung 18a auf. Die Sensorabdeckung 18a deckt die Sensorfläche 20a der Sensoreinheit 16a zumindest teilweise ab. Die Sensorabdeckung 18a deckt die Sensorfläche 20a der Sensoreinheit 16a im Wesentlichen vollständig ab. Die Sensorabdeckung 18a deckt die Sensorfläche 20a der Sensoreinheit 16a vollständig ab. Die Sensorabdeckung 18a deckt den Aufnahmebereich 42 des Grundrahmens 28a des Brillenrahmens 26a ab. Die Sensorabdeckung 18a ist von einer plattenförmigen Abdeckung gebildet. Die Sensorabdeckung 18a besteht aus einem teilweise transluzenten und/oder transparenten Material, welches abhängig von einer Wellenlänge einer Strahlung die Strahlung absorbiert bzw. reflektiert oder transmittiert. Die Sensorabdeckung 18a ist zumindest teilweise gegenüber Strahlung eines sichtbaren Lichtspektrums 22a zumindest im Wesentlichen opak. Die Sensorabdeckung 18a ist gegenüber einem Großteil der Strahlung des sichtbaren Lichtspektrums 22a zumindest im Wesentlichen opak. Die Sensorabdeckung 18a ist gegenüber Strahlung mit einer Wellenlänge von 380 nm bis 600 nm opak. Eine Opazität der Sensorabdeckung 18a entspricht in diesem Wellenlängenbereich im Wesentlichen einer Opazität des Brillenrahmens 26a, insbesondere des Grundrahmens 28a des Brillenrahmens 26a. Des Weiteren ist die Sensorabdeckung 18azumindest teilweise gegenüber Strahlung eines Infrarot-Lichtspektrums 24a zumindest im Wesentlichen transluzent. Die Sensorabdeckung 18a ist gegenüber einem Großteil der Strahlung des Nah-Infrarot-Lichtspektrums, insbesondere des gesamten Infrarot-Lichtspektrums 24a im Wesentlichen transluzent. Die Sensorabdeckung 18a ist gegenüber Strahlung mit einer Wellenlänge von 780 nm bis 1100 nm im Wesentlichen transluzent. Eine Transparenz der Sensorabdeckung 18a beträgt in diesem Wellenlängenbereich mehr als 30%, vorzugsweise mehr als 80%. Eine Transparenz der Sensorabdeckung 18a beträgt in diesem Wellenlängenbereich annähernd 90%.

Alternativ oder zusätzlich ist die Sensorabdeckung 18a insbesondere zumindest teilweise gegenüber Strahlung eines UV-Lichtspektrums zumindest im Wesentlichen transluzent. Die Sensorabdeckung 18a ist insbesondere gegenüber einem Großteil der Strahlung des UV-A-Lichtspektrums, bevorzugt des gesamten UV-Lichtspektrums, im Wesentlichen transluzent. Die Sensorabdeckung 18a ist insbesondere gegenüber Strahlung mit einer Wellenlänge von 100 nm bis 400 nm im Wesentlichen transluzent. Eine Transparenz der Sensorabdeckung 18a beträgt in diesem Wellenlängenbereich mehr als 30%, vorzugsweise mehr als 80%. Eine Transparenz der Sensorabdeckung 18a beträgt in diesem Wellenlängenbereich annähernd 90%. Die Sensorabdeckung 18a kann daher sowohl gegenüber Strahlung eines Infrarot-Lichtspektrums und/oder gegenüber Strahlung eines UV-Lichtspektrums zumindest im Wesentlichen transluzent sein.

Die Sensorabdeckung 18a ist ferner teilweise einstückig mit dem Brillenrahmen 26a ausgebildet. Die Sensorabdeckung 18a ist einstückig mit dem Grundrahmen 28a des Brillenrahmens 26a ausgebildet. Die Sensorabdeckung 18a besteht aus demselben Material wie der Grundrahmen 28a des Brillenrahmens 26a. Die Sensorabdeckung 18a weist gegenüber dem Grundrahmen 28a eine geringere Materialstärke auf. Grundsätzlich wäre jedoch auch eine andere Ausgestaltung denkbar. Die Sensorabdeckung 18a und der Brillenrahmen 26a sind teilweise in einem Spritzgussverfahren hergestellt. Die Sensorabdeckung 18a und der Grundrahmen 28a des Brillenrahmens 26a sind gemeinsam in einem Spritzgussverfahren einstückig hergestellt. Die Sensorabdeckung 18a und der Grundrahmen 28a des Brillenrahmens 26a sind gemeinsam in einem Einkomponentenspritzverfahren einstückig hergestellt. Grundsätzlich wäre jedoch auch denkbar, dass die Sensorabdeckung 18a und der Grundrahmen 28a des Brillenrahmens 26a aus verschiedenen Materialien bestehen. Dabei wäre insbesondere denkbar, dass die Sensorabdeckung 18a und der Grundrahmen 28a des Brillenrahmens 26a gemeinsam in einem Mehrkomponentenspritzverfahren einstückig hergestellt sind. Grundsätzlich wäre jedoch auch denkbar, dass die Sensorabdeckung 18a und der Grundrahmen 28a auf eine andere, einem Fachmann als sinnvoll erscheinende Weise einstückig verbunden sind, wie beispielsweise mittels eines Klebeprozesses.

Bei einem Verfahren zur Herstellung der Sonnenschutzvorrichtung 10a werden zumindest ein Teil des Brillenrahmens 26a und die Sensorabdeckung 18a einstückig in einem Spritzgussverfahren hergestellt. Die Sensorabdeckung 18a und der Grundrahmen 28a des Brillenrahmens 26a werden einstückig in einem Spritzgussverfahren, insbesondere in einem Einkomponentenspritzverfahren, hergestellt.

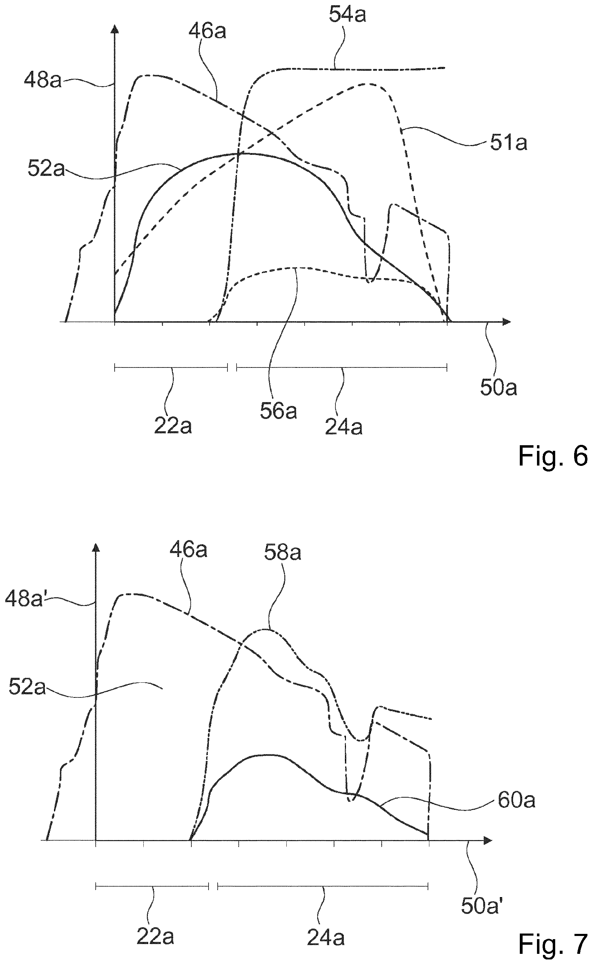

Figur 6 zeigt ein Diagramm einer Intensitätskurve 46a des Sonnenlichtspektrums über die Wellenlänge. Auf einer y-Achse 48a ist dabei die Intensität aufgetragen. Auf der x-Achse 50a ist die Wellenlänge in nm aufgetragen, wobei das Diagramm von 400 nm bis 1100 nm reicht. Ferner zeigt das Diagramm eine Empfindlichkeitskurve 51a der Sensoreinheit 16a über die Wellenlänge. Auf einer y-Achse 48a ist dabei die Empfindlichkeit aufgetragen. Die Sensoreinheit 16a weist in einem Infrarotbereich, insbesondere in einem Nah-Infrarot-Lichtspektrum, eine hohe Empfindlichkeit auf. Ein Maximalwert der Empfindlichkeit der Sensoreinheit 16a liegt innerhalb des Nah-Infrarot-Lichtspektrums. Zudem zeigt das Diagramm eine Empfindlichkeitskurve 52a der Sensoreinheit 16a über die Wellenlänge abhängig von der Intensitätskurve 46a des Sonnenlichtspektrums. Auf einer y-Achse 48a ist dabei die Empfindlichkeit aufgetragen. Des Weiteren zeigt das Diagramm eine Transparenzkurve 54a der Sensorabdeckung 18a über die Wellenlänge. Auf einer y-Achse 48a ist dabei die Transparenz in % aufgetragen, wobei das Diagramm von 0 % bis 100 % reicht. Zudem zeigt das Diagramm eine Empfindlichkeitskurve 56a der Sensoreinheit 16a abhängig von der Intensitätskurve 46a des Sonnenlichtspektrums sowie abhängig von der Transparenzkurve 54a der Sensorabdeckung 18a über die Wellenlänge. Auf einer y-Achse 48a ist dabei die Empfindlichkeit aufgetragen. Aus der Empfindlichkeitskurve 56a der Sensoreinheit 16a abhängig von der Intensitätskurve 46a des Sonnenlichtspektrums sowie abhängig von der Transparenzkurve 54a der Sensorabdeckung 18a kann geschlossen werden, wie viel Energie des Sonnenlichts von der Sensoreinheit 16a genutzt werden kann. Dementsprechend können ca. 25% der Energie des Sonnenlichts als elektrische Spannung und verfügbaren Strom zu einer Ansteuerung des Sonnenschutzfilters 12a genutzt werden.

Figur 7 zeigt ein Diagramm der Intensitätskurve 46a des Sonnenlichtspektrums über die Wellenlänge. Ferner zeigt das Diagramm eine Intensitätskurve 58a des Sonnenlichtspektrums über die Wellenlänge abzüglich der Verluste durch die Sensorabdeckung 18a. Des Weiteren zeigt das Diagramm eine Intensitätskurve 60a des Sonnenlichtspektrums über die Wellenlänge abzüglich der Verluste durch die Sensorabdeckung 18a sowie abzüglich der Verluste durch die Empfindlichkeit der Sensoreinheit 16a. Auf einer y-Achse 48a' ist dabei jeweils die Intensität aufgetragen. Auf der x-Achse 50a' ist die Wellenlänge in nm aufgetragen, wobei das Diagramm von 400 nm bis 1100 nm reicht.

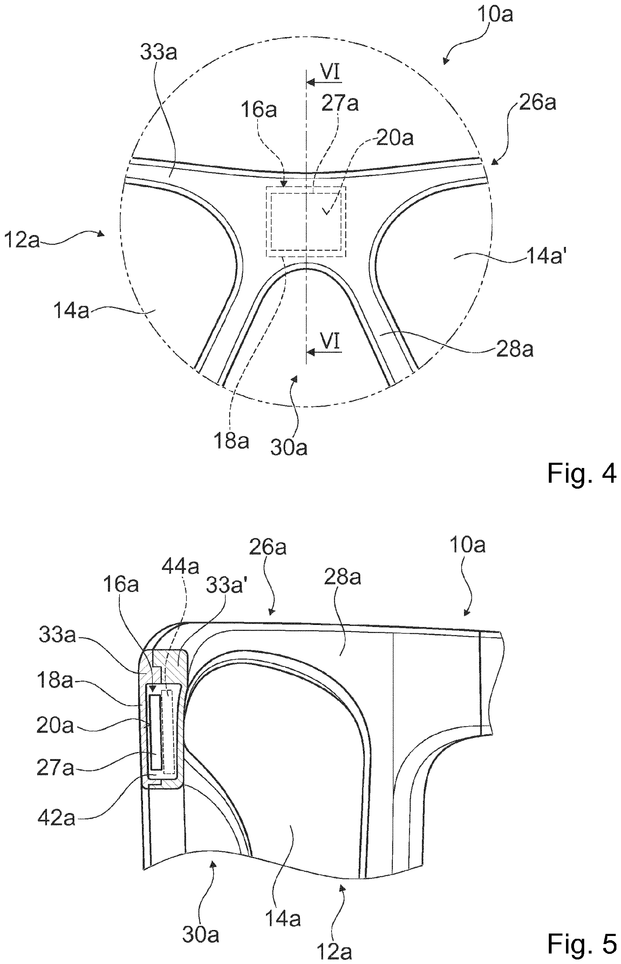

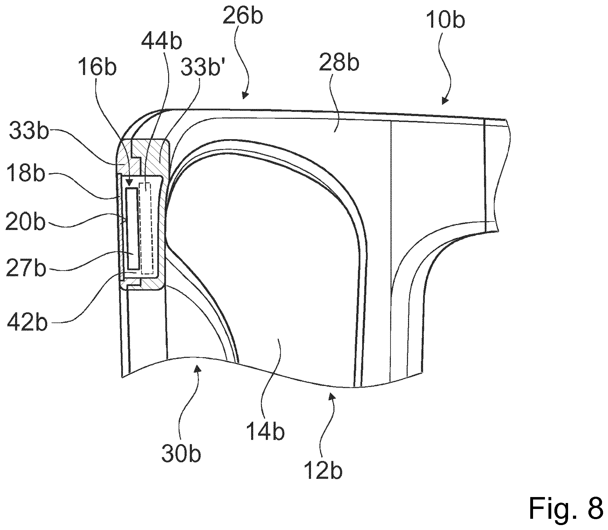

In der Figur 8 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung des Ausführungsbeispiels der Figuren 1 bis 7 verwiesen werden kann. Zur Unterscheidung der Ausführungsbeispiele ist der Buchstabe a in den Bezugszeichen des Ausführungsbeispiels der Figuren 1 bis 7 durch den Buchstaben b in den Bezugszeichen des Ausführungsbeispiels der Figur 8 ersetzt.

Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 7 verwiesen werden.

Figur 8 zeigt einen Teilausschnitt einer Sonnenschutzvorrichtung 10b. Die Sonnenschutzvorrichtung 10b ist von einer Sonnenbrille gebildet. Die Sonnenschutzvorrichtung 10b ist von einer Sonnenbrille gebildet, welche selbsttätig abhängig von einer Sonneneinstrahlung abdunkelt. Die Sonnenschutzvorrichtung 10b weist einen Brillenrahmen 26b auf. Der Brillenrahmen 26b besteht im Wesentlichen aus Kunststoff. Der Brillenrahmen 26b weist einen Grundrahmen 28b sowie zwei an dem Grundrahmen 28b beweglich gelagerte Brillenbügel auf.

Ferner weist die Sonnenschutzvorrichtung 10b einen optischen Sonnenschutzfilter 12b auf. Eine Lichtdurchlässigkeit des optischen Sonnenschutzfilters 12b ist einstellbar ausgeführt. Der optische Sonnenschutzfilter 12b ist im Wesentlichen transparent ausgebildet, wobei eine Transmission T des optischen Sonnenschutzfilters 12b elektrisch veränderbar ausgebildet ist. Der optische Sonnenschutzfilter 12b weist zwei Flüssigkristallzellen 14b auf, von denen lediglich eine sichtbar ist.

Des Weiteren weist die Sonnenschutzvorrichtung 10b eine Sensoreinheit 16b auf. Die Sensoreinheit 16b ist zu einer Erfassung einer Sonneneinstrahlung vorgesehen. Die Sonnenschutzvorrichtung 10b weist ferner eine Steuer- und Regeleinheit 44b auf. Die Steuer- und Regeleinheit 44b ist dazu vorgesehen, abhängig von einer Sonneneinstrahlung eine Durchlässigkeit des optischen Sonnenschutzfilters 12b zu steuern.

Ferner weist die Sonnenschutzvorrichtung 10b eine Sensorabdeckung 18b auf. Die Sensorabdeckung 18b deckt die Sensorfläche 20b der Sensoreinheit 16b zumindest teilweise ab. Die Sensorabdeckung 18b deckt die Sensorfläche 20b der Sensoreinheit 16b im Wesentlichen vollständig ab. Die Sensorabdeckung 18b besteht aus einem teilweise transluzenten und/oder transparenten Material, welches abhängig von einer Wellenlänge einer Strahlung die Strahlung absorbiert bzw. reflektiert oder transmittiert. Die Sensorabdeckung 18b ist gegenüber einem Großteil der Strahlung des sichtbaren Lichtspektrums zumindest im Wesentlichen opak. Die Sensorabdeckung 18b ist gegenüber Strahlung mit einer Wellenlänge von 380 nm bis 600 nm opak. Ferner ist die Sensorabdeckung 18b gegenüber einem Großteil der Strahlung des Nah-Infrarot-Lichtspektrums, insbesondere des gesamten Infrarot-Lichtspektrums, im Wesentlichen transluzent. Die Sensorabdeckung 18b ist gegenüber Strahlung mit einer Wellenlänge von 780 nm bis 1100 nm im Wesentlichen transluzent. Eine Transparenz der Sensorabdeckung 18b beträgt in diesem Wellenlängenbereich mehr als 70%, vorzugsweise mehr als 80%. Eine Transparenz der Sensorabdeckung 18a beträgt in diesem Wellenlängenbereich annähernd 90%.

Die Sensorabdeckung 18b ist ferner mit dem Brillenrahmen 26b verbunden. Die Sensorabdeckung 18b ist fest mit dem Brillenrahmen 26b verbunden. Die Sensorabdeckung 18b ist zumindest postionsfest mit dem Brillenrahmen 26b verbunden. Ferner ist die Sensorabdeckung 18b zumindest teilweise in den Grundrahmen 28b des Brillenrahmens 26b eingesetzt. Die Sensorabdeckung 18b ist form-, kraft und/oder stoffschlüssig in den Grundrahmen 28b des Brillenrahmens 26b eingesetzt. Die Sensorabdeckung 18b ist zumindest formschlüssig in den Grundrahmen 28b des Brillenrahmens 26b eingesetzt. Grundsätzlich wäre jedoch auch denkbar, dass die Sensorabdeckung 18b beispielsweise lediglich auf den Grundrahmen 28b aufgesetzt ist und so den Aufnahmebereich 42b des Grundrahmens 28b abdeckt. Dabei wäre insbesondere auch denkbar, dass die Sensorabdeckung 18b lediglich nachträglich auf den Grundrahmen 28b aufgebracht wird. Die Sensorabdeckung 18b besteht aus einem von dem Material der Grundrahmen 28b des Brillenrahmens 26b verschiedenen Material. Die Sensorabdeckung 18b ist von einer separaten plättchenförmigen Abdeckung gebildet. Die Sensorabdeckung 18b ist in dem Grundrahmen 28b des Brillenrahmens 26b verrastet. Grundsätzlich wäre jedoch auch eine andere, einem Fachmann als sinnvoll erscheinende Verbindung zwischen der Sensorabdeckung 18b und dem Grundrahmen 28b des Brillenrahmens 26b denkbar.

## Patentansprüche

1. Sonnenbrille mit einem optischen Sonnenschutzfilter (12a), der zumindest eine Flüssigkristallzelle (14a, 14a') aufweist, und mit einer Sensoreinheit (16a), welche zu einer Erfassung einer Sonneneinstrahlung vorgesehen ist,
**gekennzeichnet durch**
eine Sensorabdeckung (18a), welche eine Sensorfläche (20a) der einen Sensoreinheit (16a) zumindest teilweise abdeckt und welche gegenüber Strahlung von zumindest 70% eines Spektralbereichs des sichtbaren Lichtspektrums (22a) zumindest im Wesentlichen opak ist und, einen Brillenrahmen (26a), welcher zu einer Aufnahme des optischen Sonnenschutzfilters (12a; 12b) vorgesehen ist, wobei die Sensorabdeckung (18a) einstückig mit einem Grundrahmen (28a) des Brillenrahmens (26a) ausgebildet ist, wobei die Sensorabdeckung (18a) und der Grundrahmen (28a) des Brillenrahmens (26a) gemeinsam in einem Spritzgussverfahren einstückig hergestellt sind.

2. Sonnenbrille nach Anspruch 1,
**dadurch gekennzeichnet, dass**
die Sensorabdeckung (18a; 18b) die Sensorfläche (20a; 20b) der Sensoreinheit (16a; 16b) zumindest im Wesentlichen vollständig abdeckt.

3. Sonnenbrille nach Anspruch 1 oder 2,
**dadurch gekennzeichnet, dass**
die Sensorabdeckung (18a; 18b) gegenüber Strahlung von zumindest 70 % eines Spektralbereichs des Infrarot-Lichtspektrums (24a), insbesondere des Nah-Infrarot-Lichtspektrums, zumindest im Wesentlichen transluzent ist, sodass zumindest 70% einer entsprechenden Strahlung transmittiert werden.

4. Sonnenbrille nach einem der vorhergehenden Ansprüche,
**dadurch gekennzeichnet, dass**
die Sensorabdeckung (18a; 18b) zumindest teilweise gegenüber Strahlung von zumindest 70 % eines Spektralbereichs des UV-Lichtspektrums, insbesondere zumindest des UV-A-Lichtspektrums, zumindest im Wesentlichen transluzent ist, sodass zumindest 70% einer entsprechenden Strahlung transmittiert werden.

5. Sonnenbrille zumindest nach Anspruch 1,
**dadurch gekennzeichnet, dass**
die Sensoreinheit (16a; 16b) zumindest teilweise in den Brillenrahmen (26a; 26b) integriert ist.

6. Sonnenbrille nach einem der vorhergehenden Ansprüche,
**dadurch gekennzeichnet, dass**
die Sensoreinheit (16a; 16b) in zumindest einem Betriebszustand zu einer zumindest teilweisen Bereitstellung einer Energie zu einer Ansteuerung der zumindest einen Flüssigkristallzelle (14a, 14a'; 14b) des optischen Sonnenschutzfilters (12a; 12b) vorgesehen ist.

7. Sonnenbrille nach einem der vorhergehenden Ansprüche,
**dadurch gekennzeichnet, dass**
die Sensoreinheit (16a; 16b) zumindest eine Photodiode (27a; 27b) und/oder zumindest eine Solarzelle aufweist.

8. Verfahren zur Herstellung einer Sonnenbrille (10a; 10b) nach einem der vorhergehenden Ansprüche.

9. Verfahren nach Anspruch 8,
**dadurch gekennzeichnet, dass**
zumindest ein Teil des Brillenrahmens (26a) und die Sensorabdeckung (18a) einstückig in einem Spritzgussverfahren hergestellt werden.

## Claims

1. Sunglasses with an optical sun protection filter (12a) having at least one liquid-crystal cell (14a, 14a'), and with a sensor unit (16a), which is configured for capturing a solar irradiation,
**characterised by** a sensor cover (18a) which at least partially covers a sensor surface (20a) of the one sensor unit (16a) and which is at least substantially opaque with respect to a radiation of at least 70 % of a spectral range of the visible light spectrum (22a), and a glasses frame (26a) which is configured for accommodating the optical sun protection filter (12a; 12b),
wherein the sensor cover (18a) is implemented integrally with a base frame (28a) of the glasses frame (26a),
wherein the sensor cover (18a) and the base frame (28a) of the glasses frame (26a) are produced together integrally in an injection-moulding procedure.

2. Sunglasses according to claim 1,
**characterised in that** the sensor cover (18a; 18b) covers the sensor surface (20a; 20b) of the sensor unit (16a; 16b) at least substantially completely.

3. Sunglasses according to claim 1 or 2,
**characterised in that** the sensor cover (18a; 18b) is at least substantially translucent with respect to a radiation of at least 70 % of a spectral range of the infrared light spectrum (24a), in particular the near-infrared light spectrum, such that at least 70 % of a corresponding radiation are transmitted.

4. Sunglasses according to one of the preceding claims,
**characterised in that** the sensor cover (18a; 18b) is at least substantially translucent with respect to a radiation of at least 70 % of a spectral range of the UV light spectrum, in particular at least the UV-A light spectrum, such that at last 70 % of a corresponding radiation are transmitted.

5. Sunglasses at least according to claim 1,
**characterised in that** the sensor unit (16a; 16b) is at least partially integrated in the glasses frame (26a; 26b).

6. Sunglasses according to one of the preceding claims,
**characterised in that** in at least one operating state the sensor unit (16a; 16b) is configured to at least partly supply an energy for an actuation of the at least one liquid-crystal cell (14a, 14a'; 14b) of the optical sun protection filter (12a; 12b).

7. Sunglasses according to one of the preceding claims,
**characterised in that** the sensor unit (16a; 16b) comprises at least one photodiode (27a; 27b) and/or at least one solar cell.

8. Method for producing sunglasses (10a; 10b) according to one of the preceding claims.

9. Method according to claim 8,
**characterised in that** at least a portion of the glasses frame (26a) and the sensor cover (18a) are produced integrally in an injection-moulding process.

## Revendications

1. Lunettes de soleil avec un filtre optique de protection solaire (12a) comprenant au moins une cellule à cristaux liquides (14a, 14a') et avec une unité de captage (16a) prévue pour une détection d'une irradiation solaire,
**caractérisées par** une couverture-capteur (18a), qui au moins partiellement couvre une surface de capteur (20a) de l'une unité de captage (16a) et qui est au moins sensiblement opaque par rapport à une radiation d'au moins 70 % d'une gamme spectrale du spectre de la lumière visible, et une monture de lunettes (26a) qui est prévue à recevoir le filtre optique de protection solaire (12a ; 12b), où la couverture-capteur (18a) est implémentée intégralement avec un cadre basique (28a) de la monture de lunettes (26a),
où la couverture-capteur (18a) et le cadre basique (28a) de la monture de lunettes (26a) sont ensemble produites intégralement dans un procédé de moulage par injection.

2. Lunettes de soleil selon la revendication 1,
**caractérisées en ce que** la couverture-capteur (18a ; 18b) couvre la surface de capteur (20a ; 20b) de l'unité de captage (16a ; 16b) au moins sensiblement complètement.

3. Lunettes de soleil selon la revendication 1 ou 2,
**caractérisées en ce que** la couverture-capteur (18a ; 18b) est au moins sensiblement translucide par rapport à une radiation d'au moins 70 % d'une gamme spectrale du spectre de la lumière infrarouge (24a), en particulier du spectre de la lumière IR-A, en sorte qu'au moins 70 % d'une telle radiation sont transmis.

4. Lunettes de soleil selon l'une quelconque des revendications précédentes,
**caractérisées en ce que** la couverture-capteur (18a ; 18b) est au moins sensiblement translucide par rapport à une radiation d'au moins 70 % d'une gamme spectrale du spectre de la lumière UV, en particulier au moins du spectre de la lumière UV-A, en sorte qu'au moins 70 % d'une telle radiation sont transmis.

5. Lunettes de soleil au moins selon la revendication 1,
**caractérisées en ce que** l'unité de captage (16a ; 16b) est au moins partiellement intégrée dans la monture de lunettes (26a ; 26b).

6. Lunettes de soleil selon l'une quelconque des revendications précédentes,
**caractérisées en ce que** dans au moins un état opératif l'unité de captage (16a ; 16b) est prévue à au moins partiellement fournir une énergie pour un actionnement de l'au moins une cellule à cristaux liquides (14a, 14a' ; 14b) du filtre optique de protection solaire (12a ; 12b).

7. Lunettes de soleil selon l'une quelconque des revendications précédentes,
**caractérisées en ce que** l'unité de captage (16a ; 16b) comporte au moins une photodiode (27a ; 27b) et/ou au moins une cellule solaire.

8. Procédé pour produire des lunettes de soleil (10a ; 10b) selon l'une quelconque des revendications précédentes.

9. Procédé selon la revendication 8,
**caractérisé en ce qu'**au moins une partie de la monture de lunettes (26a) et la couverture-capteur (18a) sont produites intégralement dans un procédé de moulage par injection.
